(19) Europäisches Patentamt
European Patent Office
Office européen des brevets

(11) EP 2 075 286 B1

(12) # EUROPEAN PATENT SPECIFICATION

(45) Date of publication and mention of the grant of the patent:
**07.11.2012 Bulletin 2012/45**

(21) Application number: **08022409.0**

(22) Date of filing: **23.12.2008**

(51) Int Cl.:
***C08L 29/04*** *(2006.01)* ***C08L 31/02*** *(2006.01)*
***C08F 2/22*** *(2006.01)* ***C08F 2/20*** *(2006.01)*
*C08L 31/04 (2006.01)* *C08F 218/08 (2006.01)*
*C08F 218/12 (2006.01)* *C08F 8/12 (2006.01)*

(54) **Aqueous emulsion and manufacturing method thereof**

Wässrige Emulsion und Verfahren zu ihrer Herstellung

Émulsion aqueuse et son procédé de fabrication

(84) Designated Contracting States:
**DE**

(30) Priority: **27.12.2007 JP 2007335893**

(43) Date of publication of application:
**01.07.2009 Bulletin 2009/27**

(73) Proprietor: **The Nippon Synthetic Chemical Industry Co., Ltd.**
**Osaka 530-0018 (JP)**

(72) Inventors:
- **Shibutani, Mitsuo**
**Osaka-shi**
**Osaka 530-0018 (JP)**
- **Saito, Masahiro**
**Osaka-shi**
**Osaka 530-0018 (JP)**
- **Mandai, Shusaku**
**Osaka-shi**
**Osaka 530-0018 (JP)**
- **Murahashi, Takaaki**
**Osaka-shi**
**Osaka 530-0018 (JP)**

(74) Representative: **Kopp, Stephan**
**Kuhnen & Wacker**
**Patent- und Rechtsanwaltsbüro**
**Prinz-Ludwig-Strasse 40A**
**85354 Freising (DE)**

(56) References cited:
**EP-A- 1 589 138** **EP-A- 1 780 227**
**WO-A-00/39378** **JP-A- 2004 300 193**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 075 286 B1

## Description

### Technical Field

The present invention relates to an aqueous emulsion comprising a polymer having a structural unit derived from a vinyl ester-based monomer as a dispersoid. More specifically, the invention relates to an aqueous emulsion that does not freeze at 0°C even when a freezing-point depressant is not blended, and excellent in viscosity stability at 0°C or lower and long-term preservation stability.

### Background Art

Since aqueous emulsions comprising a polymer having a structural unit derived from a vinyl ester-based monomer represented by vinyl acetate as a dispersoid are excellent in adhesion to various materials, they are used in various uses, e.g., as adhesives for paper, woodworking, plastics and the like, binders for paper, nonwoven fabrics and the like, a paper processing agent, a fiber processing agent, a cement admixture, a construction joint agent, and coatings.
Such aqueous emulsions comprising vinyl ester-based polymers are generally manufactured by emulsion polymerization using polyvinyl alcohol-based resins (hereinafter polyvinyl alcohol is abbreviated to PVA) as a dispersant.
It is possible to control physical properties of such aqueous emulsions comprising vinyl ester-based polymers by a degree of saponification of PVA-based resins to be used as a dispersant. For example, in the case of aqueous emulsions for use in adhesives that are required to have high viscosity and viscosity stability at low temperature, PVA-based resins having a low degree of saponification are generally used. However, an aqueous emulsion obtained with the PVA-based resin having a low degree of saponification as a dispersant is poor in water resistance.
On the other hand, when PVA-based resins having a high degree of saponification are used, water resistance is improved but viscosity stability at low temperatures is insufficient. That is, it has been difficult to obtain an aqueous emulsion that satisfies both characteristics of water resistance and viscosity stability at low temperatures by the adjustment of the degree of saponification of the PVA-based resin.
Extensive examinations of using various kinds of modified PVA-based resins have been carried out for solving these problems. For example, as an aqueous emulsion excellent in standing stability at low temperatures, freezing and melting stability and, further, solvent resistance of the film, an aqueous emulsion which comprises a dispersant containing a PVA-based resin having 1.9% by mol or more of a 1,2-glycol bond which is a bonding system of the main chain and a function group having active hydrogen in the molecule is proposed (for example, see patent document 1).
In patent document 1, as the functional groups having active hydrogen, a primary amino group, a secondary amino group, an acetoacetyl group, and a diacetoneacrylamide group are exemplified, specifically aqueous emulsions obtained using a PVA-based resin containing an amino group or an acetoneacetyl group are exemplified.
An aqueous emulsion obtained using a PVA-based resin having a 1,2-diol structural unit at a side chain as a dispersant, which is excellent in mechanical stability, freezing stability and long-term standing stability at high temperatures, is proposed (for example, see patent document 2).
Further, patent document 2 describes that, as a PVA-based resin having a 1,2-diol structural unit, PVA-based resins having a residual ester amount of 15% by mol or less (i.e. the degree of saponification of more than 85% by mol) are preferred, and the PVA-based resin having a residual ester amount of from 2.2 to 6.0% by mol (i.e. the degree of saponification of 94.0 to 97.8% by mol), i.e., the PVA-based resin having a relatively high degree of saponification is used in the example.

[Patent Document 1] JP-A-2004-300193
[Patent Document 2] JP-A-2006-124682

As a further state of the art document of the relevant field, the EP 1 780 227 A1 is mentioned which relates to polyvinyl alcohol having a 1,2-glycol bond in the side chain.

### Disclosure of the Invention

### Technical Problem

The aqueous emulsions disclosed in patent documents 1 and 2 are excellent in viscosity stability at low temperatures but these viscosity stabilities are those evaluated at 5°C. However, in recent years, occasions to use aqueous emulsions in severer environments have increased and, for example, stability at 0°C or less, which corresponds to the case of use in the open air at cold districts in winter, is strongly required.
From such a point of view, on evaluation of the polyvinyl acetate emulsion obtained using, as a dispersant, a

PVA-based resin containing a 1,2-glycol bond of the main chain more than in ordinary cases and an acetoacetyl group as the active hydrogen-containing functional group as disclosed in patent document 1, it has been found that the aqueous layer is frozen at 0°C and the entire system loses flowability.

Incidentally in patent document 1, freezing stability of the aqueous emulsion is considered, and it has been confirmed that even if the aqueous emulsion has frozen, the state before being frozen can be restored by defrosting. However, when an aqueous emulsion once frozen is unfrozen by heating, since uniform heating by stirring is difficult, there are cases where a part of the emulsion with excessively high temperature breaks, or it is necessary to defrost the emulsion at a low temperature for long time to avoid such a situation. Accordingly, freezing of aqueous emulsion should be avoided to the utmost.

Similarly, on evaluation of the stability at 0°C of the aqueous emulsion comprising polyvinyl acetate obtained according to patent document 2 by emulsion polymerization of vinyl acetate with a dispersant containing a PVA-based resin having a 1,2-diol structural unit of a side chain and a degree of saponification of 94% by mol or more, it has been found that the entire system does not freeze but the viscosity increases during preservation, and the aqueous emulsion is finally gelled.

The increase of viscosity is caused for the reason that when an aqueous emulsion is preserved at 0°C, even if the aqueous emulsion does not freeze completely, micro junctions of ice occur in the aqueous layer, which break the aqueous emulsion to cause agglomeration and result in viscosity increase.

As a means for solving such a problem, prevention of freezing of an aqueous emulsion at 0°C or lower and improvement of viscosity stability have been generally contrived by the addition of a freezing-point depressant.

As the freezing-point depressants to be blended with aqueous emulsions, alcohols such as methanol, ethanol, and isopropanol, polyhydric alcohols such as ethylene glycol, glycerol, and pentaerythritol, organic solvents having high miscibility with water such as dimethyl sulfoxide, N,N-dimethylformamide, and acetonitrile, and salts such as sodium chloride, lithium chloride and calcium chloride are exemplified.

However, at the time of using an aqueous emulsion or drying after using the aqueous emulsion, the alcohols and organic solvents are liable to vaporize into the air, so that they cause pollution of environment or health damage. In the case of polyhydric alcohols, when an aqueous emulsion containing them is used as a cement admixture, there are cases where hardening of the cement is hindered, or they exude to the surface after drying and cause stickiness and soiling. In the case of salts, the stability of the emulsion lowers in some case by salting out effect and the like. Therefore, the use of the freezing-point depressant is not preferred.

That is to say, in view of the physical properties and characteristics of aqueous emulsions, it is not preferred to contain such a freezing-point depressant in the aqueous emulsion in combination.

The invention has been performed for solving the above problems. Specifically, an object of the invention is to provide an aqueous emulsion containing a polymer having a structural unit derived from vinyl ester-based monomer excellent in viscosity stability at low temperatures of 0°C or lower without blending the freezing-point depressant.

Technical Solution

As a result of earnest examinations by the present inventors in view of the above circumstances, it has been found that these problems can be solved by an aqueous emulsion according to claim 1 comprising a dispersant containing a PVA-based resin, and a polymer having a structural unit derived from a vinyl ester-based monomer as a dispersoid, wherein a rate of viscosity increase is 5% or less when the aqueous emulsion into which a freezing-point depressant is not blended is adjusted to have a solid content concentration of 50% by weight, and allowed to stand at 0°C for one week. The invention further relates to a process according to claim 1 for manufacturing the aqueous emulsion. Thus the invention has been attained.

Namely, a summary of the invention is described as follows.

[1] An aqueous emulsion comprising: a dispersant containing a polyvinyl alcohol-based resin; and a polymer having a structural unit derived from a vinyl ester-based monomer as a dispersoid; the aqueous emulsion having an average particle diameter from 0.3 to 10μm and having a solid content concentration of 30 to 70% by weight ; wherein a rate of viscosity increase is 5% or less when the aqueous emulsion into which a freezing-point depressant is not blended is adjusted to have a solid content concentration of 50% by weight and allowed to stand at 0°C for one week; and wherein the polyvinyl alcohol-based resin has a 1,2-diol structural unit represented by the following general formula (1) and having a degree of saponification of 70 to 93% by mol wherein the content of the 1,2-diol structural unit contained in the polyvinyl alcohol-based resin is from 0.5 to 15% by mol:

[Chem 1]

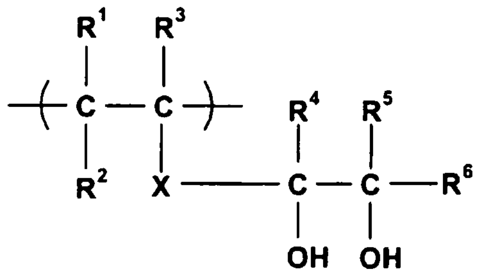 (1)

wherein each of $R^1$, $R^2$ and $R^3$ independently represents a hydrogen atom or an organic group; X represents a single bond or a bonding chain; and each of $R^4$, $R^5$ and $R^6$ independently represents a hydrogen atom or an organic group.

[2] A process for manufacturing the aqueous emulsion according to [1] or [2], which comprises emulsion-polymerizing a vinyl ester-based monomer in water in the presence of a polyvinyl alcohol-based resin having a 1,2-diol structural unit represented by the following general formula (1) and having a degree of saponification of 70 to 93% by mol:

[Chem 2]

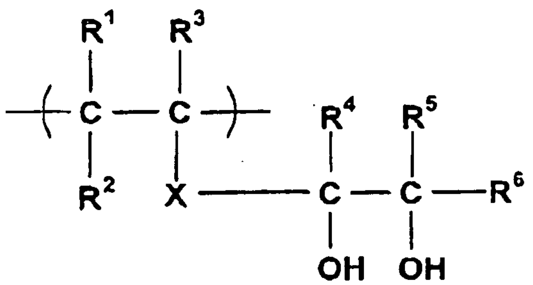 (1)

wherein each of $R^1$, $R^2$ and $R^3$ independently represents a hydrogen atom or an organic group; X represents a single bond or a bonding chain; and each of $R^4$, $R^5$ and $R^6$ independently represents a hydrogen atom or an organic group.

That is, since the PVA-based resin having a structural unit represented by the general formula (1) and a degree of saponification in a specific range for use as a dispersant in the aqueous emulsion of vinyl ester-based polymer of the invention, has high affinity with water as compared with ordinary PVA-based resins, it has a great effect of depressing a freezing point of water. By the presence of the PVA-based resin in the aqueous layer partially, freezing is suppressed even at 0°C or lower. Further, such a PVA-based resin has strong protective colloidal ability to the vinyl ester-based polymer and a tenacious hydration layer sphere is formed. Accordingly, it is thought that even if micro junctions of ice are formed, the emulsion is hardly influenced with them, as a result, the emulsion is not broken and viscosity increase ascribable to agglomeration of the emulsion does not occur. Advantageous of the Invention

Since the aqueous emulsion of the invention is excellent in viscosity stability at low temperatures around 0°C, it is not necessary to blend a freezing-point depressant with the aqueous emulsion and, as a result, various problems of aqueous emulsions attributable to the presence of such a freezing-point depressant are not caused. Therefore, the aqueous emulsion of the invention is suitable for uses, e.g., as various kinds of adhesives for paper, woodworking, plastics, etc., various kinds of binders for impregnated paper, nonwoven fabric products, etc., additives, construction joint agents, coatings, paper processing, fiber processing and the like.

Detailed Description of the Invention

The following description of the constituents of the invention is an example (a representative example) of the embodiment of the invention, and the invention is not specified to the contents.

The invention will be described in detail below.

The aqueous emulsion of the invention is an aqueous emulsion comprising a dispersant containing a PVA-based resin, and a polymer having a structural unit derived from a vinyl ester-based monomer as a dispersoid, wherein a rate of viscosity increase is 5% or less when the aqueous emulsion into which a freezing-point depressant is not

blended is adjusted to have a solid content concentration of 50% by weight and allowed to stand at 0°C for one week. The rate of viscosity increase is preferably 3% or less, and especially preferably 2% or less.

The rate of viscosity increase is found as follows:

the viscosities of an aqueous emulsion before and after preservation without blending a freezing-point depressant and being allowed to stand at 0°C for one week are measured, and the rate of viscosity increase is computed from the rate of change. Specifically, initial viscosity at 25°C is measured with a BH type viscometer (Rotor No. 4, rotation number: 10 rpm), and after the aqueous emulsion is allowed to stand at 0°C for one week in a sealed state, the viscosity is measured in the same manner, and the rate of viscosity increase to the initial viscosity is found.

The aqueous emulsion of the invention does not essentially comprise a freezing-point depressant, and particularly preferably does not comprise the freezing-point depressant. However, a small amount of the freezing-point depressant might be contained in the aqueous emulsion, specifically 0 to 5% by weight, more preferably 0 to 3% by weight, particularly preferably 0 to 1% by weight.

As vinyl ester-based monomers for use in the aqueous emulsion of the invention, vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate, 1-methoxyvinyl acetate, isopropenyl acetate and the like can be exemplified. Vinyl acetate is generally preferably used.

Each of these vinyl ester-based monomers can be used alone in polymerization, but two or more kinds of monomers can be used in polymerization as mixture, or it is also possible to use in combination of ethylenically unsaturated monomers other than the vinyl ester-based monomers within the range of not largely impeding the characteristics as the aqueous emulsion.

The examples of such monomers include olefins such as ethylene, propylene, and isobutylene, halogenated olefins such as vinyl chloride, vinyl fluoride, and vinylidene chloride, acrylic acids and esters thereof such as acrylic acid, methyl acrylate, ethyl acrylate, butyl acrylate, and 2-ethylhexyl acrylate, methacrylic acids and esters thereof such as methacrylic acid, methyl methacrylate, ethyl methacrylate, butyl methacrylate, and 2-ethylhexyl methacrylate, dimethylaminoethyl acrylate, dimethylaminoethyl methacrylate, and quaternized products thereof, acrylamide-based monomers such as acrylamide, methacrylamide, N-methylolacrylamide, and N,N-dimethylacrylamide, styrene-based monomers such as styrene, $\alpha$-methylstyrene, p-styrenesulfonic acid, and sodium salts and potassium salts thereof, and diene-based monomers such as butadiene, isoprene, and chloroprene.

The aqueous emulsion of the invention has an average particle diameter of generally from 0.3 to 10 $\mu$m, preferably from 0.5 to 5 $\mu$m, and especially preferably from 0.6 to 3 um. When the average particle diameter is too small, polymerization stability lowers and various stabilities of the emulsion lower, in particular mechanical stability is liable to decreases, when tried to obtain an emulsion having a high concentration. On the other hand, when the average particle diameter is too large, a film-forming property deteriorates, or adhesion and transparency are liable to lower.

The average particle diameter of the aqueous emulsion is measured with a dynamic light scattering photometer ("DLS-700", manufactured by Otsuka Electronics Co., Ltd.).

A solid content concentration of the aqueous emulsion of the invention is generally from 30 to 70%, and especially preferably from 40 to 60%. When the concentration is too low, emulsion particles easily precipitate, and as a result, viscosity stability lowers or freezing stability decreases. When the concentration is too high, workability is liable to be hindered.

Incidentally, the solid content concentration of the aqueous emulsion is a residue when the aqueous emulsion is dried at 105°C for 3 hours.

A process for manufacturing the aqueous emulsion of the invention will be explained below.

The aqueous emulsion of the invention can be obtained by emulsion polymerization of a vinyl ester-based monomer in water with a dispersant containing a PVA-based resin having a 1,2-diol structural unit represented by the following general formula (1) and a degree of saponification of 70 to 93% by mol.

Firstly, the PVA-based resin having a 1,2-diol structural unit represented by the following general formula (1) which is preferably used as a dispersant in the aqueous emulsion of the invention will be described.

The PVA-based resin has a structural unit represented by the following general formula (1), wherein each of $R^1$, $R^2$ and $R^3$ independently represents a hydrogen atom or an organic group; X represents a single bond or a bonding chain; and each of $R^4$, $R^5$ and $R^6$ independently represents a hydrogen atom or an organic group.

[Chem 3]

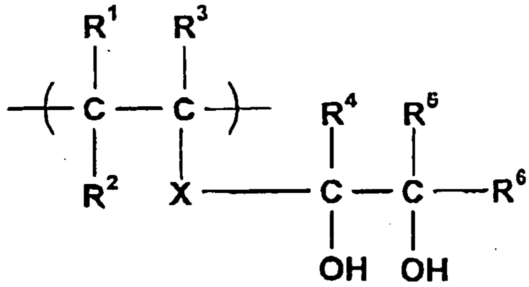

(1)

It is preferred that all of $R^1$ to $R^3$ and $R^4$ to $R^6$ in the 1,2-diol structural unit represented by the general formula (1) represent a hydrogen atom, and the PVA-based resin having a structural unit represented by the following general formula (1') is preferably used.

[Chem 4]

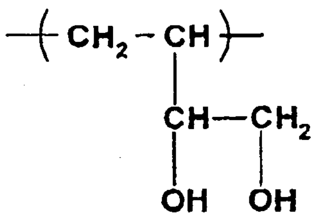

(1')

$R^1$ to $R^3$ and $R^9$ to $R^6$ in the structural unit represented by the general formula (1) may be substituted with an organic group so long as the characteristics of the resin are not largely impeded. The organic groups are not especially restricted, but an alkyl group having from 1 to 4 carbon atoms, e.g., a methyl group, an ethyl group, an n-propyl group, an isopropyl group, an n-butyl group, an isobutyl group, and a tert-butyl group are preferably used, and if necessary, they may have a substituent such as a halogen group, a hydroxyl group, an ester group, a carboxylic acid group, a sulfonic acid group.

Further, X in the 1,2-diol structural unit represented by the general formula (1) is representatively a single bond, and a single bond is most preferred from the point of heat stability and the aspect of structure stability under high temperature and acid conditions. However, so long as the effect of the invention is not impeded, X may be a bonding chain. The bonding chain is not especially restricted, and hydrocarbons such as alkylene, alkenylene, alkynylene, phenylene, and naphthylene (these hydrocarbons may be substituted with halogen or the like, e.g., fluorine, chlorine, bromine, etc.), -O-, $-(CH_2O)_m-$, $-(OCH_2)_m-$, $-(CH_2O)_mCH_2-$, -CO-, -COCO-, $-CO(CH_2)_mCO-$, $-CO(C_6H_4)CO-$, -S-, -CS-, -SO-, $-SO_2-$, -NR-,-CONR-, -NRCO-, -CSNR-, -NRCS-, -NRNR-, $-HPO_4-$, $Si(OR)_2-$, $- OSi(OR)_2-$, $-OSi(OR)_2O-$, $-Ti(OR)_2-$, $-OTi(OR)_2-$, $-OTi(OR)_2O-$, -Al(OR)-, -OAl(OR)-, -OAl(OR)O-, etc. (where each R independently represents an arbitrary substituent, and a hydrogen atom or an alkyl group is preferred, and m is a natural number) are exemplified. Above all, in the point of stability at the time of manufacture or use, an alkylene group having 6 or less carbon atoms, in particular a methylene group, and $-CH_2OCH_2-$ are preferred.

The manufacturing method of the PVA-based resin for use in the invention is not especially restricted, but (i) a method of saponification of the copolymer of a vinyl ester-based monomer and the compound represented by the following general formula (2), (ii) a method of saponification and decarbonation of the copolymer of a vinyl ester-based monomer and the compound represented by the following general formula (3), and (iii) a method of saponification and solvolysis of ketal structure of the copolymer of a vinyl ester-based monomer and the compound represented by the following general formula (4) are preferably used.

[Chem 5]

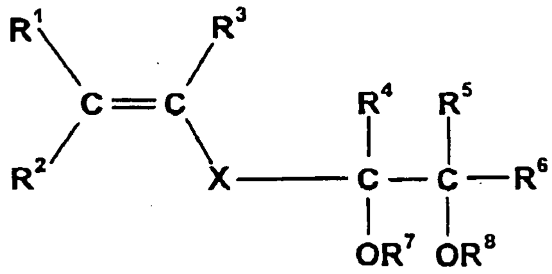

(2)

[Chem 6]

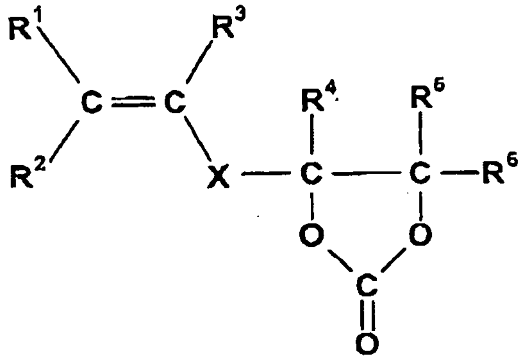

(3)

[Chem 7]

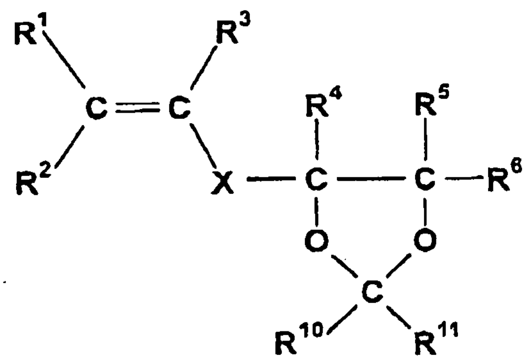

(4)

In the above general formulae (2), (3) and (4), each of $R^1$, $R^2$, $R^3$, X, $R^4$, $R^5$ and $R^6$ has the same meaning as those in the general formula (1). Each of $R^7$ and $R^8$ independently represents a hydrogen atom or $R^9$-CO- (where $R^9$ represents an alkyl group). Each of $R^{10}$ and $R^{11}$ independently represents a hydrogen atom or an organic group.
With regard to the methods (i), (ii) and (iii), the methods disclosed in JP-A-2006-95825 can be adopted.
3,4-Diacyloxy-l-butene, i.e. each of $R^1$ to $R^6$ represents hydrogen, X represents a single bond, each of $R^7$ and $R^8$ represents $R^9$-CO-, and $R^9$ represents an alkyl group, is preferred from the points that the compound is excellent in copolymerizability and industrial handleability, and 3,4-diacetoxy-1-butene, i.e. $R^9$ represents a methyl group, is especially preferably used above all.
The reactivity ratio of each monomer at the time of copolymerization of vinyl acetate as the vinyl ester-based monomer and 3,4-diacetoxy-1-butene is r (vinyl acetate) = 0.710, and r (3,4-diacetoxy-1-butene) = 0.701, which shows that 3,4-diacetoxy-1-butene is excellent in copolymerizability with vinyl acetate as compared with r (vinyl acetate) = 0.85, and r (vinylethylene carbonate) = 5.4 in the case of vinylethylene carbonate, i.e., the compound represented by the general formula (3) used in the method of (ii).

Further, a chain transfer constant of 3,4-diacetoxy-1-butene is Cx (3,4-diacetoxy-1-butene) = 0.003 (65°C), which shows that the degree of polymerization is not difficult to rise or reduction of polymerization speed does not cause, as compared with Cx (vinylethylene carbonate) = 0.005 (65°C) in the case of vinylethylene carbonate, and Cx (2,2-dimethyl-4-vinyl-1,3-dioxolan) = 0.023 (65°C) in the case of 2-dimethyl-4-vinyl-1,3-dioxolan, i.e., the compound represented by the general formula (4) used in the method of (iii).

Further, the byproduct that occurs at the time of saponification of the copolymer of 3,4-diacetoxy-1-butene is the same as the compound produced, as byproduct, from the structural unit derived from vinyl acetate widely used as a vinyl ester-based monomer at the time of saponification, and it is not necessary to provide special equipments and processes for post-treatment and solvent recovery and existing facilities can be used, thus the use of 3,4-diacetoxy-7-butene is industrially very advantageous.

The above 3,4-diacetoxy-1-butene is available as the product manufactured according to the synthesis route as disclosed in, e.g., WO 00/24702, with 3-butadiene as a starting material, and as the products manufactured according to the techniques disclosed in U.S. Patents 5,623,086 and 6,072,079 with epoxybutene derivatives as intermediates. As the reagent level, respective products manufactured by Across Inc. are available from the market. It is also possible to refine and use 3,4-diacetoxy-1-butene obtainable as the byproduct in the manufacturing process of 1,4-butanediol.

Further, 1,4-diacetoxy-1-butene that is an intermediate product in the manufacturing process of 1,4-butanediol can also be used by conversion to 3,4-diacetoxy-1-butene according to well-known isomerization reaction with a metallic catalyst such as palladium chloride. Manufacture is also possible according to the manufacturing method of organic diester disclosed in Domestic Republication of PCT Patent Application No. 00-24702.

In the PVA-based resins obtained according to methods (ii) and (iii), there are cases where a carbonate ring or an acetal ring remains in the side chain when the degree of saponification is low or decarbonation or solvolysis of ketal structure is insufficient, as a result, the amount of coarse particles of the aqueous emulsion using a dispersant containing such a PVA-based resin is liable to increase. From also these points, the PVA-based resin obtained according to the method (i) is most preferred to the use of the invention.

As the vinyl ester-based monomers, vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate and the like can be exemplified, but vinyl acetate is preferably used from the economical standpoint.

Further, besides the above monomers (vinyl ester-based monomers, the compounds represented by any of the general formulae (2), (3) and (4)), other monomers may be copolymerized so long as the physical properties of the resin is not greatly influenced. As the copolymerization components, various compounds such as $\alpha$-olefins, e.g., ethylene and propylene; hydroxyl group-containing $\alpha$-olefins, e.g., 3-buten-1-ol, 4-penten-1-ol, and 5-hexene-1,2-diol, and derivatives such as acylated products thereof; unsaturated acids, e.g., itaconic acid, maleic acid, and acrylic acid, and salts thereof, mono- or dialkyl esters; nitriles, e.g., acrylonitrile; amides, e.g., methacrylamide, and diacetoneacrylamide; olefin sulfonic acids, e.g., ethylenesulfonic acid, allylsulfonic acid, metaallylsulfonic acid, and AMPS, and salts thereof may be copolymerized.

The degree of saponification (which is measured in accordance with JIS K6726) of the PVA-based resins for use in the invention is generally 70 to 93% by mol, preferably from 80 to 92% by mol, and especially preferably from 85 to 90% by mol. When the degree of saponification is too low, there are cases where insoluble matter of the PVA-based resin is precipitated during polymerization due to cloudy phenomenon to hinder polymerization, while when it is too high, the viscosity stability at 0°C of the obtained aqueous emulsion is liable to lower.

The average degree of polymerization (which is measured in accordance with JIS K6726) of the PVA-based resins is generally from 200 to 4,000, preferably from 300 to 3,000, and more preferably from 400 to 2,000. When the average degree of polymerization is too low, protective colloidal ability cannot be obtained, while when it is too high, the viscosity of the obtained emulsion is too high, so that agitation during polymerization is impossible and there are cases where polymerization is difficult.

The content of the 1,2-diol structural unit contained in the PVA-based resin is generally from 0.5 to 15% by mol, preferably from 1 to 10% by mol, and more preferably from 1 to 8% by mol. When the content of the 1,2-diol structural unit is too low, grafting ability lowers and protective colloidal ability to the vinyl ester-based monomer and the polymer having the structural unit derived from the monomer becomes insufficient, while when the content is too high, grafting ability becomes too strong, as a result protective colloidal ability becomes too strong. Therefore, polymerization is liable to be unstable in both cases.

The content of the 1,2-diol structural unit in the PVA-based resin can be found from $^1$H-NMR spectrum (solvent:

DMSO-d6, internal standard: tetramethylsilane) of completely saponified PVA-based resin. Specifically, it is sufficient to calculate the content from the peak areas derived from hydroxyl group protons, methine protons, and methylene protons in the 1,2-diol structural unit, methylene protons in the main chain, and protons of the hydroxyl group linking to the main chain.

The manufacturing method of the aqueous emulsion of the invention will be described below.

In obtaining the aqueous emulsion, emulsion polymerization and post emulsification may be used. For performing the emulsion polymerization, any of the following methods can be used: (a) an ordinary emulsion polymerization method of adding a vinyl ester-based monomer at a time or continuously in the presence of water, a PVA-based resin and a polymerization catalyst, and then heating and stirring the reaction system, and (b) an emulsion polymerization method of adding a dispersion solution (pre-emulsion) obtained by mixing and dispersing a vinyl ester-based monomer in an aqueous solution of a PVA-based resin at a time or continuously in the presence of water, the PVA-based resin and a polymerization catalyst, and then heating and stirring the reaction system.

As representative manufacturing method, the above method (a) will be described.

The amount of the PVA-based resin of the invention used as a dispersant in emulsion polymerization differs a little depending upon the kind of the resin and desired concentration of the aqueous emulsion, but is generally from 0.1 to 30% by weight based on the total amount in the emulsion polymerization system, preferably from 1 to 25% by weight, and especially preferably from 2 to 20% by weight. When the amount is too small, it is difficult to maintain emulsion particles in a stable state, while when it is too large, the viscosity of emulsion increases too much and workability lowers, and water resistance tends to lower too much.

As the polymerization catalysts, potassium persulfate, ammonium persulfate, potassium bromate and the like are generally used alone or in combination with acid sodium sulfite. Further, water-soluble redox-system polymerization catalysts such as hydrogen peroxide-tartaric acid, hydrogen peroxide-iron salt, hydrogen peroxide-ascorbic acid-iron salt, hydrogen peroxide-Rongalit, hydrogen peroxide-Rongalit-iron salt, etc., are used. Specifically, catalysts comprising organic peroxide and redox-system such as "Kayabutyl B" and "Kayabutyl A-50C" (manufactured by Kayaku Akzo Co., Ltd.) can be used.

The use amount of polymerization catalysts is generally from 0.01 to 10 parts by weight based on 100 parts by weight of the vinyl ester-based monomer, preferably from 0.05 to 5 parts by weight, and more preferably from 1 to 3 parts by weight. When the use amount of the polymerization catalyst is too small, polymerization speed liable to be slow, while when the amount is too large, polymerization stability is liable to decrease.

The method of adding a polymerization catalyst is not especially restricted, and a method of adding all into a reaction solution once at the initial time of reaction, and a method of adding continuously with the progress of polymerization can be adopted.

In general, a vinyl ester-based monomer is dropped into a reaction vessel equipped with a stirrer and reflux condenser charged with a reaction solution containing the PVA-based resin, a polymerization catalyst and water, and emulsion polymerization is performed.

The temperature of emulsion polymerization reaction is generally from 30 to 90°C, and especially preferably from 40 to 80°C.

The dropping rate of the monomer into the reaction solution differs depending on the reactivity of the monomer, the amount of a polymerization catalyst to be used, and the reaction temperature, so that it cannot be categorically determined. It is sufficient to arbitrarily determine the dropping rate according to observation of the state of the temperature of reaction solution due to heat of polymerization or the like.

It is also possible to put in advance a part of the monomer, e.g., from 5 to 30% of the total amount, into a reaction vessel, and then drop the remaining monomer depending on the progress of polymerization. Further, it is also a preferred embodiment to drop the whole quantity of the monomer and then take a term of ripening for a certain period of time.

In the above emulsion polymerization, water-soluble polymers, nonionic surfactants and anionic surfactants may also be used as dispersants in combination with the PVA-based resin of the invention.

The use amount of the water-soluble polymers is not particularly limited, but is preferably 0.1 to 15% by weight, more preferably 0.5 to 10% by weight, even more preferably 1 to 5% by weight.

The use amount of the nonionic surfactants is not particularly limited, but is preferably 0.1 to 15% by weight, more preferably 0.5 to 10% by weight, even more preferably 1 to 5% by weight.

The use amount of the anionic surfactants is not particularly limited, but is preferably 0.1 to 15% by weight, more preferably 0.5 to 10% by weight, even more preferably 1 to 5% by weight.

As the water-soluble polymers, besides the PVA-based resin according to the invention, unmodified PVA, carboxyl group-containing PVA, formalized PVA, acetalized PVA, butyralized PVA, urethanated PVA, PVA esterified with a sulfonic acid or a carboxylic acid, and a saponified copolymer of vinyl ester and a monomer copolymerizable with the vinyl ester are exemplified. The examples of the monomers copolymerizable with vinyl ester include olefins such as ethylene, butylene, isobutylene, α-octene, α-dodecene, and α-octadecene, unsaturated acids such as acrylic acid, methacrylic acid, crotonic acid, maleic acid, maleic anhydride, and itaconic acid, and salts, and mono-or dialkyl esters thereof, nitriles such as acrylonitrile and methacrylonitrile, amides such as acrylamide, diacetone acrylamide, and methacrylamide, olefinsulfonic acid such as ethylenesulfonic acid, allylsulfonic acid, and metaallylsulfonic acid, and salts thereof, alkyl vinyl ethers, vinyl ketone, N-vinylpyrrolidone, vinyl chloride, and vinylidene chloride.

As water-soluble polymers other than PVA, cellulose derivatives such as methyl cellulose, ethyl cellulose, hydroxymethyl cellulose, hydroxypropylmethyl cellulose, hydroxybutylmethyl cellulose, hydroxyethyl cellulose, carboxymethyl cellulose, aminomethylhydroxypropyl cellulose, and aminoethylhydroxypropyl cellulose, starch, tragacanth, pectin, glue, alginic acid and salts thereof, gelatin, polyvinyl pyrrolidone, polyacrylic acid and salts thereof, polymethacrylic acid and salts thereof, polyacrylamide, polymethacrylamide, copolymers of vinyl acetate and any of the unsaturated acids, such as maleic acid, maleic anhydride, acrylic acid, methacrylic acid, itaconic acid, fumaric acid, and crotonic acid, copolymers of styrene and any of the above unsaturated acids, copolymers of vinyl ether and any of the above unsaturated acids, salts and esters of the above copolymers are exemplified.
As the nonionic surfactants, for example, a polyoxyethylene-alkyl ether type, a polyoxyethylene-alkylphenol type, a polyoxyethylene-polyhydric alcohol ester type, esters of polyhydric alcohol with fatty acid, an oxyethylene/oxypropylene block copolymer and the like are exemplified.
As the anionic surfactants, for example, a sulfate of higher alcohol, an alkali salt of higher fatty acid, polyoxyethylene alkylphenol ether sulfate, alkylbenzenesulfonate, naphthalenesulfonate/formalin condensate, alkyldiphenyl ether sulfonate, dialkyl sulfosuccinate, higher alcohol phosphate and the like are exemplified.
Further, a plasticizer such as phthalic ester and phosphoric ester, and a pH controller such as sodium carbonate, sodium acetate, and sodium phosphate may also be used in combination.
If necessary, various additives can be mixed with the aqueous emulsion of the invention according to uses, such as a crosslinking agent, a water resistance additive, a pigment, a dispersant, an antiformer, an oil solution, a viscosity modifier, a tackifier, a thickener, a water-holding agent, a fiber-softening agent, a smoothing agent, and an antistatic agent.
The aqueous emulsion of the invention is not only excellent in viscosity stability at 0°C and long-term preservation stability, and capable of preservation for about two years but also excellent in mechanical stability, freezing stability, chemical stability, and high temperature standing stability. Accordingly, the aqueous emulsion of the invention can be preferably used for uses such as a cement/mortar admixture, a cement/mortar coating material, a raw material for civil engineering, a coating material, an adhesive, a tacky adhesive (a pressure-sensitive adhesive), a fiber processing agent, a paper processing agent, a binder for an inorganic material, a modifier for a resin such as vinyl chloride, an agent for fixing and stabilizing viscous soil such as sludge and industrial wastes, a removable coating material for surface protection, and a cosmetic.

Examples

The invention will be described with reference to examples.
In the examples "%" and "parts" means by weight unless otherwise indicated.

Example 1

Manufacture of PVA-Based Resin:

Into a reaction vessel equipped with a reflux condenser, a dropping funnel and a stirrer were added 1,500 g of vinyl acetate, 285 g of methanol, and 87 g of 3,4-diacetoxy-1-butene. Azobisisobutyronitrile was added thereto in an amount of 0.09% by mol (based on the vinyl acetate added). It was heated with stirring in a nitrogen stream to initiate polymerization. At the time when the polymerization rate of the vinyl acetate reached 80%, 30 ppm (based on the vinyl acetate added) of m-dinitrobenzene was added to terminate polymerization. Subsequently, the vinyl acetate monomer remaining unreacted was removed from the system by blowing methanol vapor into the system to obtain a methanol solution of a copolymer.
Subsequently, the solution was diluted with methanol to adjust the concentration to 30%. The resulted solution was put in a kneader, and a 2% methanol solution of sodium hydroxide was added thereto in an amount of 3.2 mmol based on 1 mol of the total amount of the vinyl acetate and 3,4-diacetoxy-1-butene in the copolymer while maintaining the temperature of the solution at 40°C to perform saponification. A saponified product precipitated with the progress of the saponification. At the time when the precipitate became a particle form, it was taken out by filtration. This was thoroughly washed with methanol and dried in a hot air drier to obtain a PVA-based resin.
The degree of saponification of the obtained PVA-based resin was analyzed by the consumed amount of an alkali required for hydrolysis of the residual vinyl acetate and the residual 3,4-diacetoxy-1-butene, and it was found to be 87% by mol. The average degree of polymerization was analyzed in accordance with JIS K6726, and it was found to be 1,200. The introduced amount of the side chain having a 1,2-diol structure was determined through calculation by $^1$H-NMR (internal standard:

tetramethylsilane, solvent: DMSO-d6), and it was found to be 3% by mol.

Emulsion Polymerization:

Into a separable flask equipped with a stirrer, a reflux condenser, a dropping funnel and a thermometer were added 46 parts of water, 3 parts of the PVA-based resin, and 4.7 parts of vinyl acetate. The temperature in the flask was raised to 70°C with stirring. After temperature was raised, 2.86 parts of a 3% aqueous solution of ammonium persulfate was added to initiate polymerization. After initial polymerization was performed for 1 hour, 42.3 parts of the remaining vinyl acetate was dropped over 3 hours. Subsequently, 2.86 parts of a 3% aqueous solution of ammonium persulfate was added to the reaction solution. The reaction solution was subjected to ripening for 1 hour, and then cooled to obtain an aqueous emulsion of polyvinyl acetate having a solid content of 50%.

The low temperature viscosity stability of the obtained aqueous emulsion was evaluated as follows. The results obtained are shown in Table 2 below.

Low Temperature Viscosity Stability:

The viscosity at 25°C of the obtained aqueous emulsion was measured with a BH type rotational viscometer (Rotor No. 4, rotation number: 10 rpm) ($V_0$). After the aqueous emulsion was sealed in a closed container and allowed to stand for one week in a thermostat bath at 0°C, the viscosity at 25°C was measured in the same manner ($V_1$). The rate of viscosity increase was found from these measured values according to the following expression.

$$\text{Rate of viscosity increase (\%)} = [(V_1 - V_0)/V_0] \times 100$$

Example 2

Manufacture of PVA-Based Resin:

Into a reaction vessel equipped with a reflux condenser, a dropping funnel and a stirrer were added 1,500 g of vinyl acetate, 105 g of methanol, and 170 g of 3,4-diacetoxy-1-butene. Azobisisobutyronitrile was added thereto in an amount of 0.04% by mol (based on the vinyl acetate added). It was heated with stirring in a nitrogen stream to initiate polymerization. At the time when the polymerization rate of the vinyl acetate reached 80%, 30 ppm (based on the vinyl acetate added) of m-dinitrobenzene was added to terminate polymerization. Subsequently, the vinyl acetate monomer remaining unreacted was removed from the system by blowing methanol vapor into the system to obtain a methanol solution of a copolymer.

Subsequently, the solution was diluted with methanol to adjust the concentration to 35%. The resulted solution was put in a kneader, and a 2% methanol solution of sodium hydroxide was added thereto in an amount of 5 mmol based on 1 mol of the total amount of the vinyl acetate and 3,4-diacetoxy-1-butene in the copolymer while maintaining the temperature of the solution at 40°C to perform saponification. A saponified product precipitated with the progress of the saponification. At the time when the precipitate became a particle form, it was taken out by filtration. This was thoroughly washed with methanol and dried in a hot air drier to obtain a PVA-based resin.

The degree of saponification of the obtained PVA-based resin was 90% by mol, and the average degree of polymerization was 1,200. The introduced amount of the side chain having a 1,2-diol structure was 6% by mol.

Emulsion Polymerization:

Emulsion polymerization was carried out in the same manner as in Example 1 by using the obtained PVA-based resin to obtain an aqueous emulsion of polyvinyl acetate having a solid content of 50%.

The aqueous emulsion obtained was evaluated in the same manner as in Example 1. The results obtained are shown in Table 2 below.

Example 3

Manufacture of PVA-Based Resin:

Into a reaction vessel equipped with a reflux condenser, a dropping funnel and a stirrer were added 1,200 g of vinyl acetate, 228 g of methanol, and 66.8 g of 3,4-diacetoxy-1-butene. Azobisisobutyronitrile was added thereto in an amount of 0.05% by mol (based on the vinyl acetate added). It was heated with stirring in a nitrogen stream to initiate polymerization. At the time when the polymerization rate of the vinyl acetate reached 80%, 30 ppm (based on the vinyl

acetate added) of m-dinitrobenzene was added to terminate polymerization. Subsequently, the vinyl acetate monomer remaining unreacted was removed from the system by blowing methanol vapor into the system to obtain a methanol solution of a copolymer.

Subsequently, the solution was diluted with methanol to adjust the concentration to 35%. The resulted solution was put in a kneader, and a 2% methanol solution of sodium hydroxide was added thereto in an amount of 5.5 mmol based on 1 mol of the total amount of the vinyl acetate and 3,4-diacetoxy-1-butene in the copolymer while maintaining the temperature of the solution at 40°C to perform saponification. A saponified product precipitated with the progress of the saponification. At the time when the precipitate became a particle form, it was taken out by filtration. This was thoroughly washed with methanol and dried in a hot air drier to obtain a PVA-based resin.

The degree of saponification of the obtained PVA-based resin was 92.7% by mol, and the average degree of polymerization was 1,200. The introduced amount of the side chain having a 1,2-diol structure was 3% by mol.

Emulsion Polymerization:

Into a separable flask equipped with a stirrer, a reflux condenser, a dropping funnel and a thermometer were added 46 parts of water and 5 parts of the PVA-based resin. The temperature in the flask was raised to 75°C with stirring. After temperature was raised, 0.5 parts of a 3% aqueous hydrogen peroxide, and 0.5 parts of a 2.4% aqueous solution of tartaric acid were added, and 45 parts of vinyl acetate was dropped over 4 hours to initiate polymerization. During the dropping, 0.5 parts of a 3% aqueous hydrogen peroxide and 0.5 parts of a 2.4% aqueous solution of tartaric acid were added to the reaction solution three times in total every hour. After termination of dropping, 0.5 parts of a 3% aqueous hydrogen peroxide and 1 part of a 2.4% aqueous solution of tartaric acid were further added to the reaction solution. The reaction solution was subjected to ripening for 1 hour, and then cooled to obtain an aqueous emulsion of polyvinyl acetate having a solid content of 50%.

The aqueous emulsion obtained was evaluated in the same manner as in Example 1. The results obtained are shown in Table 2 below.

Comparative Example 1

A polyvinyl acetate aqueous emulsion was manufactured in the same manner as in Example 1 except for using an unmodified PVA having the degree of saponification of 87% by mol and the average degree of polymerization of 1,700 as the PVA-based resin. The obtained aqueous emulsion was evaluated similarly. The results obtained are shown in Table 2.

Comparative Example 2

A polyvinyl acetate aqueous emulsion was manufactured in the same manner as in Example 3 except for using a PVA-based resin having the content of the side chain having a 1,2-diol structure of 3% by mol, the average degree of polymerization of 1,200, and the degree of saponification of 95.5% by mol, which was obtained according to the same method as in Example 1, except that additive amounts of a 2% methanol solution of sodium hydroxide was added thereto in an amount of 6 mmol based on 1 mol of the total amount of the vinyl acetate and 3,4-diacetoxy-1-butene in the copolymer. The obtained aqueous emulsion was evaluated similarly. The results obtained are shown in Table 2.

TABLE 1

| | PVA-Based Resin | | |
|---|---|---|---|
| | Degree of Saponification (% by mol) | Average Degree of Polymerization | Content of 1,2-Diol Structural unit (% by mol) |
| Example 1 | 87 | 1,200 | 3 |
| Example 2 | 90 | 1,200 | 6 |
| Example 3 | 92.7 | 1,200 | 3 |
| Comparative Example 1 | 87 | 1,700 | - |
| Comparative Example 2 | 95.5 | 1,200 | 3 |

TABLE 2

| | Initial Viscosity (mPa·s) | Rate of Viscosity Increase (%) |
|---|---|---|
| Example 1 | 15,840 | 0 |
| Example 2 | 8,640 | 3 |
| Example 3 | 27,900 | 0 |
| Comparative Example 1 | 39, 600 | 6 |
| Comparative Example 2 | 17,080 | 10 |

As is clear from Table 1 and 2, from the comparison between Example 1 and Comparative Example 1, the aqueous emulsion comprising the PVA-based resin which has a 1,2-diol structural unit (Example 1) was excellent in the rate of viscosity increase compared to the aqueous emulsion comprising the PVA-based resin which does not have a 1,2-diol structural unit (Comparative Example 1). In addition, from the comparison between Example 3 and Comparative Example 2, the aqueous emulsion comprising the PVA-based resin having a degree of saponification as relatively low as 92.7% by mol (Example 3) was highly excellent in the rate of viscosity increase compared to the aqueous emulsion comprising the PVA-based resin having a degree of saponification as relatively high as 95.5% by mol (Comparative Example 2). Therefore, it was found that an aqueous emulsion comprising a PVA-based resin which has a 1,2-diol structural unit and a relatively low degree of saponification was a preferable embodiment in order to achieve the effect of the invention.

Industrial Applicability

Since the aqueous emulsion of the invention is excellent in viscosity stability at 0°C, it is not necessary to blend a freezing-point depressant and, as a result, the aqueous emulsion is free from the reduction of physical characteristics attributable to the presence of such a freezing-point depressant. Further, the aqueous emulsion of the invention is also excellent in long term preservation stability, so that industrially very useful.

**Claims**

1. An aqueous emulsion obtained by emulsion-polymerizing comprising: a dispersant containing a polyvinyl alcohol-based resin; and a polymer having a structural unit derived from a vinyl ester-based monomer as a dispersoid; the aqueous emulsion having an average particle diameter from 0.3 to 10 μm and having a solid content concentration from 30 to 70% by weight; wherein a rate of viscosity increase is 5% or less when the aqueous emulsion into which a freezing-point depressant is not blended is adjusted to have a solid content concentration of 50% by weight and allowed to stand at 0°C for one week; and wherein the polyvinyl alcohol-based resin has a 1,2-diol structural unit represented by the following general formula (1) and having a degree of saponification of 70 to 93% by mol, wherein the content of the 1,2-diol structural unit contained in the polyvinyl alcohol-based resin is from 0.5 to 15% by mol:

[Chem 1]

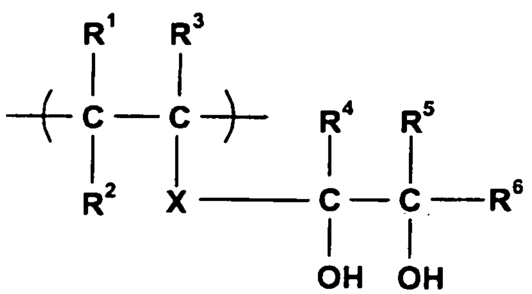

(1)

wherein each of $R^1$, $R^2$ and $R^3$ independently represents a hydrogen atom or an organic group; X represents a single bond or a bonding chain; and each of $R^4$, $R^5$ and $R^6$ independently represents a hydrogen atom or an organic group.

2. A process for manufacturing the aqueous emulsion according to claim 1, which comprises emulsion-polymerizing a vinyl ester-based monomer in water in the presence of a polyvinyl alcohol-based resin having a 1,2-diol structural unit represented by the following general formula (1) and having a degree of saponification of 70 to 93% by mol:

[Chem 2]

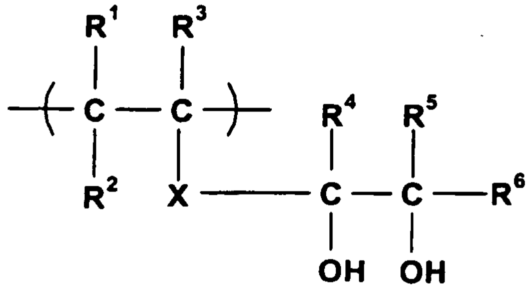

(1)

wherein each of $R^1$, $R^2$ and $R^3$ independently represents a hydrogen atom or an organic group; X represents a single bond or a bonding chain; and each of $R^4$, $R^5$ and $R^6$ independently represents a hydrogen atom or an organic group.

**Patentansprüche**

1. Wässrige Emulsion, die durch Emulsionspolimerisieren erhalten wird, umfassend: ein Dispergiermittel, das ein Harz auf Polyvinylalkoholbasis enthält; und ein Polymer mit einer strukturellen Einheit, die von einem Monomer auf Vinylesterbasis als ein Dispersoid abgeleitet wird; wobei die wässrige Emulsion einen durchschnittlichen Partikeldurchmesser von 0,3 bis 10 μm aufweist und eine Feststoffgehaltskonzentration von 30 bis 70 Gewichts-% aufweist; wobei ein Anstieg einer Viskositätsrate 5 % oder weniger beträgt, wenn die wässrige Emulsion, in die ein Gefrierpunktsenkungsmittel nicht beigemengt wird, so eingestellt ist, dass sie eine Feststoffgehaltskonzentration von 50 Gewichts-% aufweist und eine Woche lang bei 0° C stehen gelassen wird; und wobei das Harz auf Polyvinyalkoholbasis eine strukturelle 1,2-Dioleinheit aufweist, die durch die folgende allgemeine Formel (1) dargestellt wird und einen Verseifungsgrad von 70 bis 93 Mol-% aufweist, wobei der Gehalt der strukturellen 1,2-Dioleinheit, die in dem Harz auf Polyvinyl-Alkoholbasis enthalten ist, 0,5 bis 15 Mol-% beträgt:

[Chemische Formel 1]

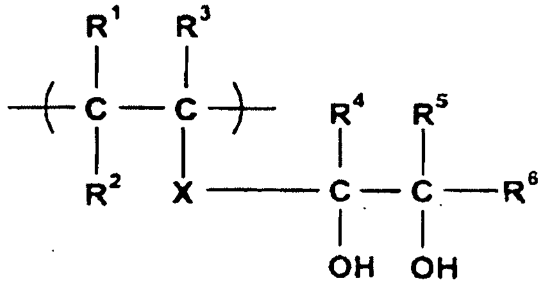

(1)

wobei $R^1$, $R^2$ und $R^3$ jeweils unabhängig voneinander ein Wasserstoffatom oder eine organische Gruppe darstellen; X eine einzelne Bindung oder eine Bindungskette darstellt; und $R^4$, $R^5$ und $R^6$ jeweils unabhängig voneinander ein Wasserstoffatom oder eine organische Gruppe darstellen.

2. Verfahren zum Herstellen der wässrigen Emulsion nach Anspruch 1, das ein Emulsionspolimerisieren eines Monomers auf Vinylesterbasis in Wasser in Gegenwart eines Harzes auf Polyvinylalkoholbasis mit einer strukturellen 1,2-Dioleinheit umfasst, die durch die nachstehende allgemeine Formel (1) dargestellt wird und einen Verseifungsgrad von 70 bis 93 Mol-% aufweist:

[Chemische Formel 2]

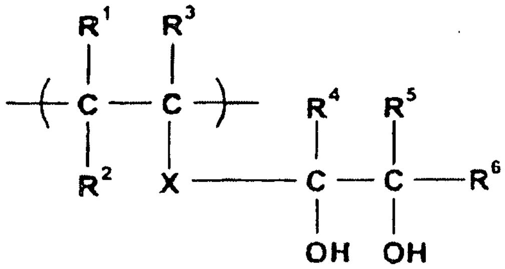

(1)

wobei $R^1$, $R^2$ und $R^3$ jeweils unabhängig voneinander ein Wasserstoffatom oder eine organische Gruppe darstellen; X eine einzelne Bindung oder eine Bindungskette darstellt; und $R^4$, $R^5$ und $R^6$ jeweils unabhängig voneinander ein Wasserstoffatom oder eine organische Gruppe darstellen.

**Revendications**

1. Emulsion aqueuse obtenue par polymérisation en émulsion comprenant : un dispersant contenant une résine à base de poly(alcool vinylique) ; et un polymère ayant une unité structurale dérivée d'un monomère à base d'ester de vinyle sous forme d'un dispersoïde ; l'émulsion aqueuse ayant un diamètre de particule moyen de 0,3 à 10 $\mu$m et ayant une concentration de teneur en solides de 30 à 70 % en poids ; ou un taux d'augmentation de la viscosité est 5 % ou moins quand l'émulsion aqueuse dans laquelle un agent abaissant le point de congélation n'est pas incorporé est ajustée pour avoir une concentration de teneur en solides de 50 % en poids et laissée au repos à 0°C pendant une semaine ; et où la résine à base de poly(alcool vinylique) a une unité structurale 1,2-diol représentée par la formule générale (1) suivante et ayant un degré de saponification de 70 à 93 % en mole, où la teneur de l'unité structurale 1,2-diol contenue dans la résine à base de poly(alcool vinylique) est de 0,5 à 15 % en mole :

[Chem 1]

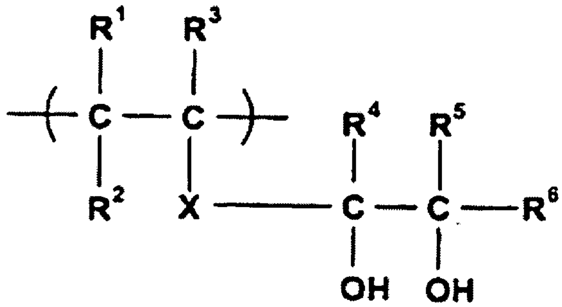

(1)

où chacun de $R^1$, $R^2$ et $R^3$ représente indépendamment un atome d'hydrogène ou un groupe organique ; X représente une simple liaison ou une chaine de liaison ; et chacun de $R^4$, $R^5$ et $R^6$ représente indépendamment un atome d'hydrogène ou un groupe organique.

2. Procédé pour fabriquer l'émulsion aqueuse selon la revendication 1 qui comprend la polymérisation en émulsion

d'un monomère à base d'ester de vinyle dans l'eau en présence d'une résine à base de poly(alcool vinylique) ayant une unité structurale 1,2-diol représentée par la formule générale (1) suivante et ayant un degré de saponification de 70 à 93 % en mol :

[Chem 2]

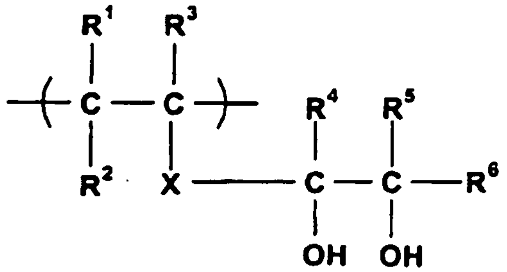

(1)

où chacun de $R^1$, $R^2$ et $R^3$ représente indépendamment un atome d'hydrogène ou un groupe organique ; X représente une simple liaison ou une chaîne de liaison ; et chacun de $R^4$, $R^5$ et $R^6$ représente indépendamment un atome d'hydrogène ou un groupe organique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004300193 A
- JP 2006124682 A
- EP 1780227 A1
- JP 2006095825 A
- WO 0024702 A
- US 5623086 A
- US 6072079 A
- WO 0024702 W